# EUROPÄISCHE PATENTSCHRIFT

(11) **EP 3 496 992 B1**
(45) Veröffentlichungstag und Bekanntmachung des Hinweises auf die Patenterteilung: **02.12.2020**
(21) Anmeldenummer: 17748483.9
(22) Anmeldetag: 03.08.2017
(51) Int. Cl.: B62D 1/16, F16C 33/02

(54) **DREHLAGERANORDNUNG FÜR EINE LENKSÄULE EINES KRAFTFAHRZEUGS**
ROTATIONAL BEARING ARRANGEMENT FOR A STEERING COLUMN OF A MOTOR VEHICLE
ENSEMBLE PALIER ROTATIF CONÇU POUR UNE COLONNE DE DIRECTION D'UN VÉHICULE AUTOMOBILE

(30) Priorität: 08.08.2016 DE 102016114678
(43) Veröffentlichungstag der Anmeldung: 19.06.2019
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT)
(74) Vertreter: thyssenkrupp Intellectual Property GmbH
(86) Internationale Anmeldenummer: PCT/EP2017/069658
(87) Internationale Veröffentlichungsnummer: WO 2018/029075

(56) Entgegenhaltungen:
- JP-A- 2014 141 225

## Beschreibung

Die Erfindung betrifft eine Drehlageranordnung für eine Lenksäule eines Kraftfahrzeugs, mit einer Lenkwelle, die in einer Manteleinheit um ihre Drehachse drehbar gelagert ist, wobei die Manteleinheit mit einer zweiten Gleitlagerschale versehen ist, die im axialen Abstand zur ersten Gleitlagerschale angeordnet ist und einen zweiten umlaufenden radialen Vorsprung aufweist, der in eine zweite umlaufende Nut der Lenkwelle eingreift.

Eine derartige Drehlageranordnung ist aus der DE69101303T2 bekannt. Dabei ist die Lagerung für eine Lenkwelle einer Lenksäule als Gleitlagerung ausgebildet. Nachteilig an dieser Lösung ist, dass die Lagerung der Lenkwelle in axialer Richtung unsteif ausgebildet ist und sie einen komplexen Aufbau aufweist.

Eine Drehlageranordnung der eingangs genannten Art ist aus der JP 2014 141225 A bekannt. Diese weist zwei mit axialem Abstand angeordnete Gleitlager auf, bei denen jeweils eine Gleitlagerschale in eine umlaufende Nut der Lenkwelle eingreift. Nachteilig daran ist, dass Spiel in den beiden Drehlagern auftreten kann.

Aufgabe der Erfindung ist es, eine Drehlageranordnung der eingangs genannten Art zu verbessern.

Die erfindungsgemäße Lösung besteht darin, dass an der Manteleinheit benachbart zur zweiten Gleitlagerschale ein Lagerring mit einem nach innen vorspringenden Lagerabschnitt befestigt ist, dass eine radiale Außenseite der zweiten Gleitlagerschale mit Schiebesitz an der Manteleinheit anliegt und dass zwischen dem Lagerabschnitt des Lagerrings und einer axialen Seitenfläche der zweiten Gleitlagerschale eine Druckfeder angeordnet ist, die die zweite Gleitlagerschale gegenüber der an der Manteleinheit gehaltenen ersten Gleitlagerschale in axialer Richtung vorspannt.

Durch die genannte Vorspannung wird Spiel in den beiden Drehlagern vermieden.

Durch die Ausgestaltung der Lenkwelle mit der umlaufenden Nut kommt die erfindungsgemäße Drehlageranordnung pro Lager mit einer einzigen Gleitlagerschale aus. Die Funktion der gegenüberliegenden Gleitlagerschale wird hier durch die Nut der Lenkwelle ersetzt. Daher ist der Aufbau und die Montage auf besonders einfache Weise möglich.

Da für die drehbare Lagerung der Lenkwelle in der Regel zwei Drehlager erforderlich sind, wird eine erfindungsgemäße Ausgestaltung eines zweiten Drehlagers empfohlen, bei der die Manteleinheit mit einer zweiten Gleitlagerschale versehen ist, die im axialen Abstand zur ersten Gleitlagerschale angeordnet ist und einen zweiten umlaufenden radialen Vorsprung aufweist, der in eine zweite umlaufende Nut der Lenkwelle eingreift. Für das zweite Drehlager ergeben sich dieselben Vorteile wie für das erste Drehlager.

In vorteilhafter Ausgestaltung der Erfindung wird empfohlen, dass die erste Gleitlagerschale durch Presssitz mit einem Endabschnitt der Manteleinheit verbunden ist und die zugehörige erste umlaufende Nut in einem Endbereich der Lenkwelle angeordnet ist, der zur Befestigung eines Lenkrads bestimmt ist. Durch den Presssitz wird die erste Gleitlagerschale unverrückbar fest mit der Manteleinheit verbunden, sodass sie in der Lage ist, die drehbare Lenkwelle sowohl in axialer Richtung als auch in radialer Richtung zu fixieren. Die Ausgestaltung eines Presssitzes ist besonders einfach und erfordert keine zusätzlichen Befestigungsmittel.

In einer ersten Variante der beschriebenen Ausgestaltungsform kann der Lagerring auf der der ersten Gleitlagerschale zugewandte Axialseite der zweiten Gleitlagerschale angeordnet sein, sodass die Druckfeder die beiden Gleitlagerschalen axial auseinander drückt.

In einer zweiten Variante der beschriebenen Ausführungsform ist vorgesehen, dass der Lagerring auf der der ersten Gleitlagerschale abgewandte Axialseite der zweiten Gleitlagerschale angeordnet ist, sodass die Druckfeder die beiden Gleitlagerschalen axial aufeinander zu drückt. Bei beiden Varianten wird das Lagerspiel wirksam eliminiert.

Eine weitere Ausgestaltung der Erfindung, bei der die Druckfeder eine Tellerfeder, Spiralfeder oder eine Wellfeder ist, hat den Vorteil, dass die Druckfeder in einem relativ schmalen ringförmigen Bereich zwischen dem Lagerring der Manteleinheit und der Lenkwelle untergebracht werden kann und dabei dennoch eine erhebliche Vorspannkraft zur Verfügung stellt.

Als weitere vorteilhafte Ausgestaltung der Erfindung wird empfohlen, dass die erste Gleitlagerschale und/oder die zweite Gleitlagerschale aus Kunststoff besteht. Das Kunststoffmaterial ist hart genug, um die von der fixierten Lenkwelle ausgehenden Kräfte auf die Manteleinheit zu übertragen, und dabei elastisch genug, um geringfügige Verformungen der Gleitlagerschalen während des Zusammenbaus der Lenksäule zu ermöglichen.

Bevorzugt ist der Kunststoff ein Polyoxymethylen (POM) oder ein Polyamid (PA). In Versuchen hat sich gezeigt, dass diese Kunststoffe besonders geeignet sind, die Anforderungen bzgl. Steifigkeit in axialer Richtung, Verschleißverhalten und Reibverhalten zu erfüllen.

Bevorzugt kann die Gleitlagerschale einen reibungsreduzierenden Stoff umfassen oder damit versehen sein, beispielsweise Molybdändisulfid, Graphit oder Polytetrafluorethylen. Diese reibungsreduzierenden Stoffe können auch als Schmierstoffe bezeichnet werden. Diese dienen nicht nur dazu, die Reibung während der Rotation der Lenkwelle zu reduzieren, sondern auch die Differenz zwischen der Haftreibung und Gleitreibung zu reduzieren, so dass ein ruckartiges Losbrechen bei der Einleitung einer Lenkbewegung reduziert ist. Das ruckartige Losbrechen stellt eine Kraftspitze bzw. Momentenspitze dar, die es zu überwinden gilt, um die Lenkwelle in Rotation zu versetzen.

Gemäß einer weiteren vorteilhaften Ausgestaltungsform der Erfindung ist die erste umlaufende Nut und/oder die zweite umlaufende Nut durch Rollieren in die Lenkwelle eingeformt. Diese Maßnahme ist besonders einfach und kostengünstig realisierbar.

Zur Montage der ersten Gleitlagerschale und der zweiten Gleitlagerschale auf der Lenkwelle ist es vorgesehen, dass die Gleitlagerschalen auf die Lenkwelle aufgeschoben werden, bis diese in die entsprechende Nut eingreifen. Durch die hohe Elastizität der Gleitlagerschalen aus Kunststoff können diese ohne zusätzliche Maßnahmen auf die Lenkwelle aufgeschoben werden.

Selbstverständlich umfasst die Erfindung auch Ausführungsformen, bei denen die Ausgestaltung der Lenkwelle und die Ausgestaltung der Manteleinheit bezüglich der Anordnung von erster und zweiter Nut, Befestigung von erster und zweiter Gleitlagerschale und Lagerring vertauscht sind und die Ausgestaltung des Lagerrings und der ersten und zweiten Gleitlagerschale funktionsgemäß angepasst sind. Insbesondere könnte die erste Gleitlagerschale oder die zweite Gleitlagerschale und gegebenenfalls der Lagerring auf der Lenkwelle befestigt sein, wobei die umlaufenden Nuten in die Manteleinheit eingeformt wären. Entsprechend hätten die Gleitlagerschalen umlaufende Vorsprünge, die radial nach außen vorstehen. Möglich ist auch eine Ausführungsform, bei der das erste Gleitlager wie bei der ausführlich beschriebenen ersten Ausführungsform ausgestaltet ist und nur das zweite Gleitlager entsprechend der zweiten Ausführungsform ausgestaltet ist oder umgekehrt.

Ausführungsbeispiele der Erfindung werden nachfolgend anhand der Zeichnungen näher erläutert. Die Figuren zeigen im Einzelnen:
Figur 1: eine perspektivische Ansicht einer Lenksäule mit starrer Manteleinheit und drehbarer Lenkwelle;
Figur 2: eine erfindungsgemäße Drehlageranordnung einer drehbaren Lenkwelle in einer Manteleinheit als Explosionsdarstellung;
Figur 3: ein Schnitt durch Manteleinheit und Lenkwelle mit erfindungsgemäßer Drehlageranordnung in einer ersten Ausführungsform;
Figur 4: ein vergrößertes Detail aus Figur 3 des Bereichs des ersten Drehlagers;
Figur 5: ein vergrößertes Detail aus Figur 3 des zweiten Drehlagers;
Figur 6: eine Darstellung entsprechend Figur 3, jedoch einer zweiten Ausführungsform der Erfindung.

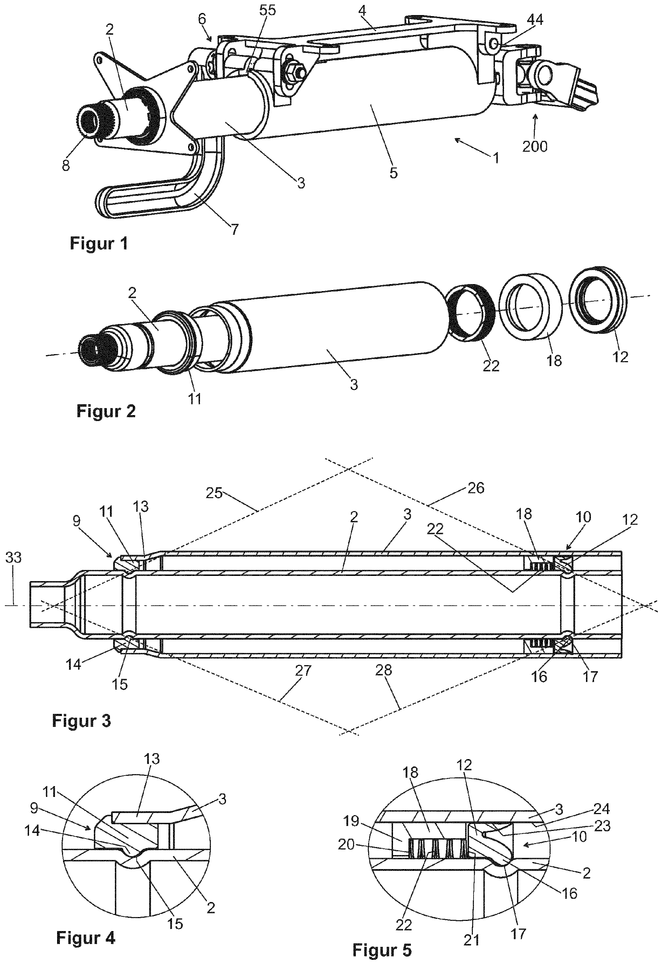

In Figur 1 erkennt man einen Abschnitt einer Lenksäule 1 eines Kraftfahrzeugs. Eine Lenkwelle 2 ist im Inneren einer Manteleinheit 3 drehbar gelagert. Die Manteleinheit 3 ist mittels eines Trägers 4 fest mit dem nicht gezeigten Chassis eines Kraftfahrzeugs verbindbar. Ein Klemmrohr 5 ist mit dem als Konsole ausgebildeten Träger 4 verschwenkbar um eine Schwenkachse 44 verbunden, wobei das Klemmrohr 5 auf der Oberseite einen Längsschlitz 55 aufweist. Des Weiteren ist am Träger 4 eine Klemmvorrichtung 6 angeordnet, die mittels eines Betätigungshebels 7 zugespannt oder geöffnet werden kann. Wird der Betätigungshebel 7 in Zuspannrichtung bewegt, so bewirkt die Klemmvorrichtung 6 eine elastische Verformung des Klemmrohrs 5, wobei sich der genannte Längsschlitz verkleinert (verschmälert) und die im Klemmrohr 5 angeordnete Manteleinheit 3 festgeklemmt wird, sodass sie starr mit dem Träger 4 verbunden ist. Ein aus der Manteleinheit 3 hervorstehender Endbereich 8 der Lenkwelle 2 ist mit einem als Außenverzahnung ausgebildeteten Formschlussprofil versehen und ist für die Aufnahme eines nicht gezeigten Lenkrades bestimmt. Die Lenkwelle 2 ist mit einem Universalgelenk 200 verbunden. Wie man am besten in den Figuren 3 bis 6 erkennt, ist die Lenkwelle 2 in der Manteleinheit 3 mittels eines ersten Gleitlagers 9 und eines zweiten Gleitlagers 10 drehbar gelagert.

Das erste Gleitlager 9 besteht aus einer ersten Gleitlagerschale 11 aus Kunststoff, die durch Presssitz mit einem Endabschnitt 13 der Manteleinheit 3 verbunden ist. Desweiteren weist die erste Gleitlagerschale 11 einen umlaufenden ersten radialen Vorsprung 14 auf, der in eine erste umlaufende Nut 15 der Lenkwelle 2 eingreift. Die erste umlaufende Nut 15 ist in dem Endbereich 8 der Lenkwelle 2 angeordnet, der zur Befestigung eines Lenkrads bestimmt ist.

Entsprechend besitzt das zweite Gleitlager 10 eine zweite Gleitlagerschale 12, welche im axialen Abstand zur ersten Gleitlagerschale 11 mit Schiebesitz an der Manteleinheit 3 angeordnet ist. Die zweite Gleitlagerschale 12 besitzt einen zweiten umlaufenden radialen Vorsprung 16, der in eine zweite umlaufende Nut 17 der Lenkwelle 2 eingreift.

Des Weiteren ist an der Manteleinheit 3 benachbart zur zweiten Gleitlagerschale 12 ein umlaufender Lagerring 18 befestigt, der einen nach innen vorspringenden umlaufenden Lagerabschnitt 19 aufweist. Zwischen einer inneren Axialfläche 20 des Lagerabschnitts 19 und einer gegenüberliegenden axialen Seitenfläche 21 der zweiten Gleitlagerschale 12 ist eine Druckfeder 22 angeordnet die sich an der inneren Axialfläche 20 des Lagerabschnitts 19 abstützt und die zweite Gleitlagerschale 12 gegenüber der Manteleinheit 3 in axialer Richtung nach rechts zu verschieben sucht. Die zweite Gleitlagerschale 12 ist aber durch ihren zweiten radialen Vorsprung 16 in der zweiten umlaufenden Nut 17 der Lenkwelle 2 abgestützt und zwar sowohl in radialer Richtung als auch in axialer Richtung. Deshalb bewirkt die Vorspannung der Druckfeder 22 in axialer Richtung, dass die zweite Gleitlagerschale 12 die Lenkwelle 2 in axialer Richtung nach rechts zu verschieben sucht (siehe Figuren 5 und 3). Dies ist möglich, weil die radiale Außenseite 23 der zweiten Gleitlagerschale 12 mit der Innenwandfläche 24 der Manteleinheit 3 einen Schiebesitz bildet und durch starke Kräfte gegenüber der Manteleinheit 3 in axialer Richtung verschoben werden kann. Als Reaktion darauf stellt sich am ersten Gleitlager 9 eine Vorspannung ein, weil die erste Gleitlagerschale 11 durch festen Presssitz mit der Manteleinheit 3 verbunden ist und gegenüber der Manteleinheit 3 nicht verschiebbar ist. Die Druckfeder 22 bewirkt aber, dass die Lenkwelle 2 sich in axialer Richtung nach links verschieben will, während die Manteleinheit 3 nach rechts zieht. Dies bewirkt, dass die erste Gleitlagerschale 11 gegenüber der ersten umlaufenden Nut 15 der Lenkwelle 2 vorgespannt wird. Wegen der schrägen Flanken der umlaufenden Nuten 15, 17 bewirkt die Vorspannung in axialer Richtung auch eine Vorspannung in radialer Richtung, so dass auch die resultierende Vorspannungskraft schräg, also in einem Winkel zur Längsachse 33, ausgerichtet ist. Die gestrichelten Linien 25 bis 28 in Figur 3 sind in Richtung der resultierenden Vorspannungskräfte ausgerichtet. Die Linien 25 und 27 bzw. 26 und 28 schneiden sich außerhalb der ersten und zweiten Gleitlagerschalen 11,12, d.h. die Schnittpunkte der Linien 25 und 27 bzw. 26 und 28 liegen nicht zwischen den den Gleitlagerschalen 11, 12 sondern auf der jeweiligen der anderen Gleitlagerschale abgewandten Seite der Gleitlagerschale. Eine solche Lageranordnung, wie diese in den Figuren 3 bis 5 dargestellt ist, wird auch als O-Anordnung bezeichnet. Eine solche Lageranordnung bietet den Vorteil, dass Axialbelastungen in beide axialen Richtungen, aber jeweils nur von einem Lager bzw. Lagersatz aufgenommen wird, dadurch ergibt sich eine starre Lagerung. Dank des großen Abstands zwischen den wirksamen Lagermitten (Schnittpunkt der Linien 25 und 27 bzw. 26 und 28) eignet sich diese Anordnung besonders gut für das Aufnehmen von Momentbelastungen die auf die Lenkwelle wirken beispielsweise im Fall eines Fahrzeugfrontalaufpralls. Bei einem Fahrzeugfrontalaufprall wird ein Biegemoment durch den auf das Lenkrad auftreffenden Fahrzeugführer in die Lenkwelle eingetragen.

Bei der oben beschriebenen Ausführungsform ist der Lagerring 18 zwischen der ersten Gleitlagerschale 11 und der zweiten Gleitlagerschale, also im Innenbereich angeordnet. Dabei werden die beiden Gleitlagerschalen 11, 12 axial nach außen gedrückt, nämlich die erste Gleitlagerschale 11 nach links und die zweite Gleitlagerschale 12 nach rechts.

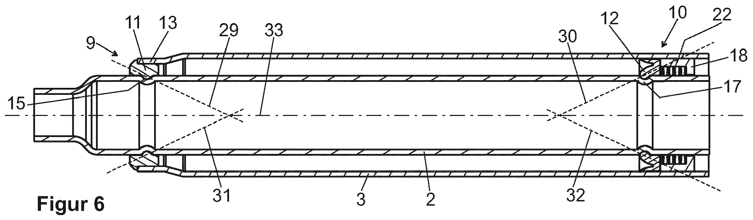

In einer in Figur 6 dargestellten zweiten Ausführungsform der Erfindung ist der Lagerring 18 aber auf der der ersten Gleitlagerschale 11 abgewandten Axialseite der zweiten Gleitlagerschale 12 angeordnet, befindet sich somit außerhalb durch die beiden Gleitlagerschalen 11, 12 begrenzten Innenraums. Dies hat zur Folge, dass die zweite Gleitlagerschale 12 nach links gedrückt wird und dabei die Lenkwelle 2 mitnimmt, sodass die erste Gleitlagerschale 11 an der rechten Flanke der ersten umlaufenden Nut 15 anliegt. Somit werden die beiden Gleitlagerschalen 11, 12 aufeinander zu gedrückt. Dies hat Auswirkungen auf die resultierenden Kräfte zwischen den Gleitlagerschalen 11, 12 und den umlaufenden Nuten 15, 17. Wie man in Figur 6 erkennt, verlaufen die in Kraftrichtung ausgerichteten gestrichelten Linien 29 bis 32 anders als die gestrichelten Linien 25 bis 28 aus Figur 3, denn die gestrichelten Linien 29 und 31 und die Linie 30 und 32 schneiden sich zwischen den Gleitlagerschalen 11, 12. Diese Lageranordnung wird als X-Anordnung bezeichnet.

Die Druckfeder 22 ist im vorliegenden Ausführungsbeispiel als Tellerfederstapel ausgebildet. Es kann aber auch eine Wellfeder verwendet werden. Die Gleitlagerschalen 11, 12 bestehen aus Kunststoff. Der Lagerring 18 ist aus Metall gefertigt. Die umlaufenden Nuten 15, 17 sind durch Rollieren in die Lenkwelle 2 eingeformt worden. Die beiden Gleitlager 9, 10 bestehen somit aus den Gleitlagerschalen 11, 12 und den in die Lenkwelle 2 einrollierten umlaufenden Nuten 15, 17. Die Fertigung ist daher besonders einfach und kostengünstig. Auch die Vorrichtung zur axialen Vorspannung ist besonders einfach aufgebaut. Sie besteht lediglich aus dem Lagerring 18 und der Druckfeder 22. Der Lagerring 18 und der Innendurchmesser der Manteleinheit 3 weisen eine Übermaßpassung auf, d.h. der Lagerring 18 ist mittels eines Presssitzes nach der Montage in der Manteleinheit 3 aufgenommen und stellt ein Widerlager für die Druckfeder 22 dar.

Selbstverständlich umfasst die Erfindung Ausführungsformen, bei denen die Nuten in die Manteleinheit 3 eingeformt sind und die Gleitlagerschalen auf der Lenkwelle 2 befestigt sind. Ebenso kann der Lagerring statt an der Manteleinheit 3 auch an der Lenkwelle 2 befestigt werden.

Zur Montage der erfindungsgemäßen Drehlageranordnung wird die erste Gleitlagerschale 11 über die lenkradseitigen Endbereich 8 der Lenkwelle 2 geschoben, wobei sich die aus Kunststoff bestehende Gleitlagerschale 11 elastisch ausweitet und danach in die erste umlaufende Nut 15 einschnappt. Anschließend wird die aus Lenkwelle 2 und erster Gleitlagerschale 11 bestehende Baugruppe in das Rohr der Manteleinheit 3 gepresst, wobei die erste Gleitlagerschale 11 durch Presssitz fest mit dem Endabschnitt 13 der Manteleinheit 3 verbunden wird. Danach wird die aus Lagerring 18, Druckfeder 22 und zweiter Gleitlagerschale 12 bestehende Baugruppe in den ringförmigen Zwischenraum zwischen der Lenkwelle 2 und der Manteleinheit 3 eingeschoben, bis der zweite radiale Vorsprung 16 der zweiten Gleitlagerschale 12 in die zweite umlaufende Nut 17 der Lenkwelle 2 einschnappt.

### BEZUGSZEICHENLISTE

- 1: Lenksäule
- 2: Lenkwelle
- 3: Manteleinheit
- 4: Träger
- 5: Klemmrohr
- 6: Klemmvorrichtung
- 7: Betätigungshebel
- 8: Endbereich
- 9: erstes Gleitlager
- 10: zweites Gleitlager
- 11: erste Gleitlagerschale
- 12: zweite Gleitlagerschale
- 13: Endabschnitt
- 14: erster radialer Vorsprung
- 15: erste umlaufende Nut
- 16: zweiter radialer Vorsprung
- 17: zweite umlaufende Nut
- 18: Lagerring
- 19: Lagerabschnitt
- 20: innere Axialfläche
- 21: axiale Seitenfläche
- 22: Druckfeder
- 23.: radiale Außenseite
- 24: Innenwandfläche
- 25 bis 32: gestrichelte Linie
- 33: Drehachse

## Patentansprüche

1. Drehlageranordnung für eine Lenksäule (1) eines Kraftfahrzeugs, mit einer Lenkwelle (2), die in einer Manteleinheit (3) um ihre Drehachse (33) drehbar gelagert ist, wobei die Manteleinheit (3) mit mindestens einer ersten Gleitlagerschale (11) versehen ist, die einen ersten umlaufenden radialen Vorsprung (14) aufweist, der in eine erste umlaufende Nut (15) der Lenkwelle (2) eingreift, wobei die Manteleinheit (3) mit einer zweiten Gleitlagerschale (12) versehen ist, die im axialen Abstand zur ersten Gleitlagerschale (11) angeordnet ist und einen zweiten umlaufenden radialen Vorsprung (16) aufweist, der in eine zweite umlaufende Nut (17) der Lenkwelle (2) eingreift, **dadurch gekennzeichnet, dass** an der Manteleinheit (3) benachbart zur zweiten Gleitlagerschale (12) ein Lagerring (18) mit einem nach innen vorspringenden Lagerabschnitt (19) befestigt ist, dass eine radiale Außenseite (23) der zweiten Gleitlagerschale (12) mit Schiebesitz an der Manteleinheit (3) anliegt und dass zwischen dem Lagerabschnitt (19) des Lagerrings (18) und einer axialen Seitenfläche (21) der zweiten Gleitlagerschale (12) eine Druckfeder (22) angeordnet ist, die die zweite Gleitlagerschale (12) gegenüber der an der Manteleinheit (3) gehaltenen ersten Gleitlagerschale (11) in axialer Richtung vorspannt.

2. Drehlageranordnung nach Anspruch 1, **dadurch gekennzeichnet, dass** die erste Gleitlagerschale (11) durch Presssitz mit einem Endabschnitt (13) der Manteleinheit (3) verbunden ist und die zugehörige erste umlaufende Nut (15) in einem Endbereich (8) der Lenkwelle (2) angeordnet ist, der zur Befestigung eines Lenkrads bestimmt ist.

3. Drehlageranordnung nach Anspruch 1, **dadurch gekennzeichnet, dass** der Lagerring (18) auf der der ersten Gleitlagerschale (11) zugewandten Axialseite (21) der zweiten Gleitlagerschale (12) angeordnet ist, sodass die Druckfeder (22) die beiden Gleitlagerschalen (11, 12) auseinander drückt.

4. Drehlageranordnung nach Anspruch 1, **dadurch gekennzeichnet, dass** der Lagerring (18) auf der der ersten Gleitlagerschale (11) abgewandten Axialseite der zweiten Gleitlagerschale (12) angeordnet ist, sodass die Druckfeder (22) die beiden Gleitlagerschalen (11, 12) aufeinander zu drückt.

5. Drehlageranordnung nach einem der Ansprüche 1 bis 4, **dadurch gekennzeichnet, dass** die Druckfeder (22) eine Tellerfeder oder eine Wellfeder ist.

6. Drehlageranordnung nach einem der vorhergehenden Ansprüche, **dadurch gekennzeichnet, dass** die erste Gleitlagerschale (11) und/oder die zweite Gleitlagerschale (12) aus Kunststoff besteht.

7. Drehlageranordnung nach Anspruch 6, **dadurch gekennzeichnet, dass** der Kunststoff ein Polyoxymethylen oder ein Polyamid ist.

8. Drehlageranordnung nach einem der vorhergehenden Ansprüche, **dadurch gekennzeichnet, dass** die erste umlaufende Nut (15) und/oder die zweite umlaufende Nut (17) durch Rollieren in die Lenkwelle (2) eingeformt sind.

## Claims

1. Pivot bearing arrangement for a steering column (1) of a motor vehicle, having a steering shaft (2), which is rotatably mounted about its axis of rotation (33) in a casing unit (3), wherein the casing unit (3) is provided with at least one first sliding bearing shell (11), which comprises a first circumferential radial projection (14), which engages in a first circumferential groove (15) of the steering shaft (2), wherein the casing unit (3) is provided with a second sliding bearing shell (12), which is arranged axially spaced from the first sliding bearing shell (11) and comprises a second circumferential radial projection (16), which engages in a second circumferential groove (17) of the steering shaft (2), **characterized in that** on the casing unit (3), adjacent to the second sliding bearing shell (12), a bearing ring (18) with a bearing section (19) projecting towards the inside is fastened, **in that** a radial outside (23) of the second sliding bearing shell (12) lies against the casing unit (3) with sliding fit and **in that** between the bearing section (19) of the bearing ring (18) and an axial lateral face (21) of the second sliding bearing shell (12) a compression spring (22) is arranged, which preloads the second sliding bearing shell (12) relative to the first sliding bearing shell (11) held on the casing unit (3) in the axial direction.

2. Pivot bearing arrangement according to Claim 1, **characterized in that** the first sliding bearing shell (11) is connected to an end section (13) of the casing unit (3) by press fit and the associated first circumferential groove (15) is arranged in an end region (8) of the steering shaft (2), which is intended for fastening a steering wheel.

3. Pivot bearing arrangement according to Claim 1, **characterized in that** the bearing ring (18) is arranged on the axial side (21) of the second sliding bearing shell (12) facing the first sliding bearing shell (11), so that the compression spring (22) pushes the two sliding bearing shells (11, 12) apart.

4. Pivot bearing arrangement according to Claim 1, **characterized in that** the bearing ring (18) is arranged on the axial side of the second sliding bearing shell (12) facing away from the first sliding bearing shell (11), so that the compression spring (22) presses the two sliding bearing shells (11, 12) towards one another.

5. Pivot bearing arrangement according to any one of Claims 1 to 4, **characterized in that** the compression spring (22) is a disk spring or a wave spring.

6. Pivot bearing arrangement according to any one of the preceding claims, **characterized in that** the first sliding bearing shell (11) and/or the second sliding bearing shell (12) consist/consists of plastic.

7. Pivot bearing arrangement according to Claim 6, **characterized in that** the plastic is a polyoxymethylene or a polyamide.

8. Pivot bearing arrangement according to any one of the preceding claims, **characterized in that** the first circumferential groove (15) and/or the second circumferential groove (17) are/is molded into the steering shaft (2) by rolling.

## Revendications

1. Ensemble palier rotatif pour une colonne de direction (1) d'un véhicule automobile, comprenant un arbre de direction (2) qui est supporté dans une unité d'enveloppe (3) de manière à pouvoir tourner autour de son axe de rotation (33), l'unité d'enveloppe (3) étant pourvue d'au moins une première coque de palier lisse (11) qui présente une première saillie radiale périphérique (14) qui s'engage dans une première rainure périphérique (15) de l'arbre de direction (2), l'unité d'enveloppe (3) étant pourvue d'une deuxième coque de palier lisse (12) qui est disposée à distance axiale de la première coque de palier lisse (11) et qui présente une deuxième saillie radiale périphérique (16) qui s'engage dans une deuxième rainure périphérique (17) de l'arbre de direction (2), **caractérisé en ce qu**'une bague de palier (18) avec une portion de palier saillant vers l'intérieur (19) est fixée au niveau de l'unité d'enveloppe (3) à côté de la deuxième coque de palier lisse (12), en ce qu'un côté extérieur radial (23) de la deuxième coque de palier lisse (12) s'applique avec ajustement coulissant contre l'unité d'enveloppe (3) et en ce qu'entre la portion de palier (19) de la bague de palier (18) et une surface latérale axiale (21) de la deuxième coque de palier lisse (12) est disposé un ressort de compression (22) qui précontraint dans la direction axiale la deuxième coque de palier lisse (12) par rapport à la première coque de palier lisse (11) maintenue au niveau de l'unité d'enveloppe (3).

2. Ensemble palier rotatif selon la revendication 1, **caractérisé en ce que** la première coque de palier lisse (11) est connectée par ajustement serré à une portion d'extrémité (13) de l'unité d'enveloppe (3) et la première rainure périphérique associée (15) est disposée dans une région d'extrémité (8) de l'arbre de direction (2) qui est prévue pour la fixation d'un volant de direction.

3. Ensemble palier rotatif selon la revendication 1, **caractérisé en ce que** la bague de palier (18) est disposée du côté axial (21) de la deuxième coque de palier lisse (12) tourné vers la première coque de palier lisse (11) de telle sorte que le ressort de compression (22) presse les deux coques de palier lisse (11, 12) à l'écart l'une de l'autre.

4. Ensemble palier rotatif selon la revendication 1, **caractérisé en ce que** la bague de palier (18) est disposée sur le côté axial de la deuxième coque de palier lisse (12) opposé à la première coque de palier lisse (11) de telle sorte que le ressort de compression (22) presse les deux coques de palier lisse (11, 12) l'une vers l'autre.

5. Ensemble palier rotatif selon l'une quelconque des revendications 1 à 4, **caractérisé en ce que** le ressort de compression (22) est un ressort à coupelle ou un ressort ondulé.

6. Ensemble palier rotatif selon l'une quelconque des revendications précédentes, **caractérisé en ce que** la première coque de palier lisse (11) et/ou la deuxième coque de palier lisse (12) se composent de plastique.

7. Ensemble palier rotatif selon la revendication 6, **caractérisé en ce que** le plastique est un polyoxyméthylène ou un polyamide.

8. Ensemble palier rotatif selon l'une quelconque des revendications précédentes, **caractérisé en ce que** la première rainure périphérique (15) et/ou la deuxième rainure périphérique (17) sont formées par roulage dans l'arbre de direction (2).
